# EUROPÄISCHE PATENTSCHRIFT

(11) **EP 4 054 908 B1**
(45) Veröffentlichungstag und Bekanntmachung des Hinweises auf die Patenterteilung: **22.11.2023**
(21) Anmeldenummer: 20800634.6
(22) Anmeldetag: 02.11.2020
(51) Int. Cl.: B60T 8/1755

(54) **ELEKTRISCHES BREMSSYSTEM FÜR FAHRZEUGE**
ELECTRIC BRAKE SYSTEM FOR VEHICLES
SYSTEME DE FREIN ELECTRIQUE POUR VEHICULE

(30) Priorität: 08.11.2019 DE 102019130233
(43) Veröffentlichungstag der Anmeldung: 14.09.2022
(73) Patentinhaber: ZF CV Systems Global GmbH, 3006 Bern (CH)
(72) Erfinder: SCHÜNEMANN, Gerd, 30880 Laatzen (DE); RICKE, Janik, 31311 Uetze (DE)
(74) Vertreter: Ohlendorf, Henrike
(86) Internationale Anmeldenummer: PCT/EP2020/080634
(87) Internationale Veröffentlichungsnummer: WO 2021/089458

(56) Entgegenhaltungen:
- WO-A1-2019/034297
- DE-A1-102008 061 944
- DE-A1-102017 005 816

## Beschreibung

Die vorliegende Erfindung betrifft ein elektrisches Bremssystem für Fahrzeuge sowie ein Verfahren zum Steuern eines Bremssystems für Fahrzeuge.

Bremssysteme für Fahrzeuge sind hinlänglich bekannt. DE 10 2004 009 469 A1 beschreibt ein elektronisch gesteuertes elektromechanisches Bremssteuerungssystem für ein Nutzfahrzeug. Das Fahrzeug weist eine Vorderachse mit zwei Rädern, eine Hinterachse mit zwei Rädern und eine Betriebsbremse zum Abbremsen der Räder auf. Jedem der vier Räder ist ein Bremsaggregat zur Bremsbetätigung zugeordnet. Die Bremsaggregate sind elektrisch ansteuerbar. Ferner ist eine erste zentrale Steuereinrichtung vorgesehen zur Steuerung der Bremsaggregate. Des Weiteren ist eine zweite zentrale Steuereinrichtung als redundante Steuereinrichtung zur ersten Steuereinrichtung vorgesehen. Jeder Achse ist ein Achsmodulator zugeordnet, der aus einem Achsbremsbefehl von der zentralen Steuereinheit einen Radbremsbefehl für jedes Rad auf der ihm zugeordneten Achse ermittelt. In den zentralen Steuereinheiten erfolgt eine dynamische Anpassung der Bremsbefehle zur Fahrzeugstabilisierung.

DE 10 2017 005 816 A1 zeigt ein Verfahren zur Bestimmung der durch Betätigung von Radbremsen erreichbaren Gesamtverzögerungswerte eines Nutzfahrzeugs oder einer Fahrzeugkombination mit mehreren Achsen. Sie betrifft außerdem eine Bremsanlage zur Durchführung des Verfahrens sowie ein Nutzfahrzeug oder eine Fahrzeugkombination mit einer solchen Bremsanlage zur Durchführung des Verfahrens. Um während der Fahrt die aktuell erreichbaren Gesamtverzögerungswerte zur Verzögerung eines Nutzfahrzeugs oder einer Fahrzeugkombination mit mehreren Achsen zu bestimmen, ist vorgesehen, dass zur Umsetzung einer Verzögerungsanforderung bei Teilbremsungen eine Bremskraftverteilung mit ungleich auf Bremseneinheiten mit den Radbremsen einer oder mehrerer Achsen verteilten Bremskräften erfolgt, wobei jeweils eine der Bremseneinheiten ausgewählt wird und über diese ausgewählte Bremseneinheit eine größere Bremskraft aufgebracht wird als über die anderen Bremseneinheiten, wobei eine aktuelle Verzögerung des Nutzfahrzeugs oder der Fahrzeugkombination gemessen oder ermittelt wird und als entsprechender Teilverzögerungswert der jeweils ausgewählten Bremseneinheit zugeordnet und abgespeichert wird. Die erreichbaren Gesamtverzögerungswerte werden als Summe der Teilverzögerungswerte der Bremseneinheiten bestimmt.

Zur Verbesserung von Fahrzeugbremssystemen wird ein Bremssystem mit einer reduzierten Komplexität gewünscht.

Es ist daher eine Aufgabe der vorliegenden Erfindung, ein elektrisches Bremssystem für Fahrzeuge mit einer reduzierten Komplexität vorzusehen. Es ist insbesondere eine Aufgabe der vorliegenden Erfindung, ein elektrisches Bremssystem für Fahrzeuge mit reduzierten Kosten vorzusehen.

Diese Aufgabe wird durch ein elektrisches Fahrzeugbremssystem nach Anspruch 1 sowie durch ein Verfahren zum Steuern eines elektrischen Fahrzeugbremssystems nach Anspruch 10 gelöst.

Somit wird ein elektrisches Bremssystem für Fahrzeuge vorgesehen, welches einen Bremswertgeber, mindestens eine erste Achse mit mindestens zwei Rädern und eine zweite Achse mit mindestens zwei Rädern aufweist. Ein erster Achsmodulator ist der ersten Achse zugeordnet. Ein zweiter Achsmodulator ist der zweiten Achse zugeordnet. Ferner ist eine einzige zentrale Steuereinheit vorgesehen, die in Abhängigkeit von einem Bremssignal von dem Bremswertgeber oder in Abhängigkeit von einer weiteren Bremsanforderung (z. B. von Fahrerassistenzsystemen) über Datenverbindung der zentralen Steuereinheit mitgeteiltem Bremssignal ein erstes Bremssignal für den ersten Achsmodulator und ein zweites Bremssignal für den zweiten Achsmodulator erzeugt und auszugibt. Der erste und zweite Achsmodulator sind jeweils dazu ausgestaltet, die Räder der ersten und zweiten Achse in Abhängigkeit von dem ersten und zweiten Bremssignal von der zentralen Steuereinheit zu verzögern, wobei die Achsmodulatoren das Bremssignal von dem Bremswertgeber als Eingangssignal empfangen zusätzlich zu dem ersten oder zweiten Bremssignal von der zentralen Steuereinheit. Die Achsmodulatoren verwenden das Bremssignal von dem Bremswertgeber als Eingangssignal zur Erzeugung der Bremsmodulatorsignale, wenn ein Fehler in oder an der zentralen Steuereinheit auftritt.

Damit wird ein elektrisches Fahrzeugbremssystem bzw. ein Bremssystem für Fahrzeuge mit lediglich einer einzigen zentralen Steuereinheit (Zentralmodul) vorgesehen. Jeder Achse des Fahrzeugs wird ein Achsmodulator zugeordnet, welches jeweils ein Bremssignal von der zentralen Steuereinheit empfängt und eine entsprechende Verzögerung auf die Räder der jeweiligen Achse initiiert. Der Achsmodulator weist mindestens einen Bremsmodulator für jedes der mit der Achse verbundenen Räder auf. Der Bremsmodulator wirkt auf einen Bremsaktuator, so dass die Räder abgebremst werden.

Die zentrale Steuereinheit erhält ein Bremssignal von einem Bremswertgeber oder von einem dazu berechtigten System des Fahrzeugs. Die zentrale Steuereinheit wandelt das empfangene Bremssignal in Bremssignale für den ersten und zweiten Achsmodulator um, um das Fahrzeug verzögern bzw. abbremsen zu können. Der Achsmodulator empfängt das jeweilige Bremssignal von der zentralen Steuereinheit und wandelt das Bremssignal mittels der Bremsmodulatoren in ein Signal für die Bremsaktuatoren um.

Gemäß einer bevorzugten Ausführungsform weist jeder Achsmodulator eine Achssteuereinheit und mindestens zwei Bremsmodulatoren Die Bremsmodulatoren erzeugen jeweils Bremsmodulatorsignale zur Steuerung der Bremsaktuatoren und geben diese an die Bremsaktuatoren aus, welche direkt an dem jeweiligen Rad vorgesehen sind.

Demnach wird das Bremssignal von dem Bremswertgeber nicht nur an die zentrale Steuereinheit, sondern auch an jeden der Achsmodulatoren ausgegeben. Dadurch, dass die Achsmodulatoren das Bremssignal von dem Bremswertgeber empfangen, können die Achsmodulatoren auch bei Ausfall der zentralen Steuereinheit oder bei einem Fehler in der Leitung zwischen der zentralen Steuereinheit und den jeweiligen Achsmodulatoren ein redundantes Bremsen ermöglichen. Damit kann die Sicherheit des erfindungsgemäßen Bremssystems auch bei Reduzierung der Komplexität des Bremssystems und der damit einhergehenden Reduzierung der Kosten gewährleistet werden.

Gemäß einer weiteren bevorzugten Ausführungsform ist mindestens eine Achsmodulatorsignalleitung zwischen mindestens zwei Achsmodulatoren vorgesehen. Diese dient der Kommunikation zwischen den Achsmodulatoren, insbesondere wenn ein Fehler in oder an der zentralen Steuereinheit vorhanden ist. Damit kann ein Ausgleich der Achsbremskräfte, der die Fahrzeugstabilität und die Bremsleistung verbessern kann, auch bei Ausfall der zentralen Steuereinheit erfolgen.

Die Erfindung betrifft ebenfalls ein Fahrzeug, insbesondere Nutzfahrzeug, mit einem Bremswertgeber, mindestens einer ersten Achse mit mindestens zwei Rädern, einer zweiten Achse mit mindestens zwei Rädern, und mindestens einem oben beschriebenen elektrischen Bremssystem.

Gemäß einer Ausführungsform ist die Masse des Fahrzeugs auf die erste und zweite Achse im Wesentlichen gleichmäßig verteilt. Alternativ dazu kann die Masse des Fahrzeugs auch ungleichmäßig auf die Achsen verteilt sein.

Die Erfindung betrifft ebenfalls ein Verfahren zum Steuern eines erfindungsgemäßen elektrischen Bremssystems für Fahrzeuge.

Während im Stand der Technik zwei zentrale und redundante zentrale Steuereinheiten in Form von Zentralmodulen des Bremssystems vorgesehen sind, kommt das erfindungsgemäße Bremssystem mit lediglich einer einzigen zentralen Steuereinheit aus. Die zentrale Steuereinheit fungiert als Zentralmodul des Bremssystems und dient zur Steuerung und Überwachung des elektrisch geregelten Bremssystems. Eine Sollverzögerung des Fahrzeugs wird aus einem Signal des Bremswertgebers ermittelt. Beispielsweise kann die Sollverzögerung zusammen mit den jeweiligen Radgeschwindigkeiten der Räder des Fahrzeugs als Eingangssignal für eine elektronische Regelung verwendet werden. Bei einem elektronisch geregelten pneumatischen Bremssystem ermittelt diese Regelung Drucksollwerte für das Bremssystem an der Vorderachse und an der Hinterachse. Für das elektrische Bremssystem ermittelt die Regelung elektrische Sollwerte, für die Ansteuerung der elektrischen Bremsaktuatoren. Die Sollwerte werden mit Istwerten verglichen und eine vorhandene Differenz kann ausgeregelt werden. Die zentrale Steuereinheit ist mit den Achsmodulen verbunden und tauscht Daten und insbesondere das jeweilige Bremssignal für die jeweiligen Achsmodulatoren aus.

Gemäß einem Aspekt der vorliegenden Erfindung wird für jede Achse ein Achsmodulator vorgesehen. Der Achsmodulator stellt eine Achs-Steuereinheit dar. Der Achsmodulator kann optional pneumatische Druckregelkanäle aufweisen.

Der Achsmodulator kann über einen zusätzlichen Anschluss für einen redundanten pneumatischen Bremskreis verfügen.

Der Achsmodulator kann eine Steuereinheit oder ein Steuermodul aufweisen, welche eine Antiblockiersystem ABS-Steuerung der Räder ermöglichen, welche mit der Achse verbunden sind.

Weitere Ausgestaltungen der Erfindung sind Gegenstand der Unteransprüche.

Vorteile und Ausführungsbeispiele der Erfindung werden nachstehend unter Bezugnahme auf die Zeichnung näher erläutert.
- Figur 1: zeigt eine schematische Darstellung eines Bremssystems gemäß einem ersten Ausführungsbeispiel und
- Figur 2: zeigt eine schematische Darstellung eines Bremssystems gemäß einem zweiten Ausführungsbeispiel.

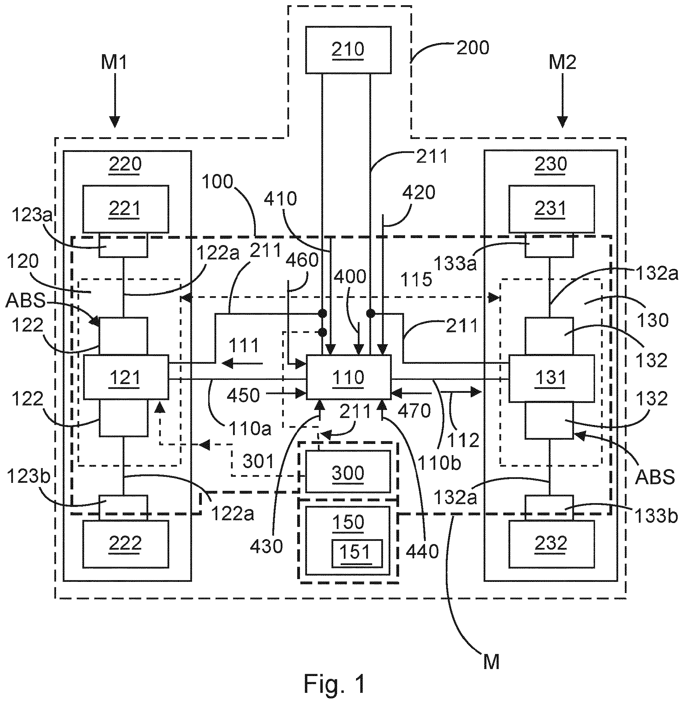

Figur 1 zeigt eine schematische Darstellung eines Bremssystems gemäß einem ersten Ausführungsbeispiel. Ein Fahrzeug 200 (insbesondere ein Nutzfahrzeug), ist mit einem Bremssystem 100. Das Fahrzeug 200 weist einen Bremswertgeber 210 und mindestens zwei Achsen 220, 230 jeweils mit mindestens zwei Rädern 221, 222, 231, 232 auf. Die Räder 221, 222, 231, 232 können angetriebene oder nicht angetriebene Räder darstellen. Das Bremssystem 100 gemäß dem ersten Ausführungsbeispiel ist als ein elektronisch geregeltes Bremssystem EBS für Fahrzeuge, insbesondere Nutzfahrzeuge, ausgestaltet. Diese Nutzfahrzeuge oder Fahrzeuge weisen vorzugsweise eine ähnliche Massenverteilung M1, M2 auf der Vorderachse und Hinterachse auf. Die Masse M der Fahrzeuge ist somit im Wesentlichen nicht ungleichmäßig verteilt. Derartige Nutzfahrzeuge 200 können Reisebusse oder Lastkraftwagen mit Ladefläche oder Kofferaufbau darstellen.

Die zentrale Steuereinheit kann gemäß einem Aspekt der Erfindung aber auch eine ungleichmäßige Achslastverteilung berücksichtigen. Ein Ausfall der zentralen Steuereinheit hat dann jedoch zur Folge, dass eine dynamische achslastabhängige Bremskraftverteilung nicht mehr gewährleistet werden kann. Bei Fahrzeuge mit typischerweise gleicher Achslastverteilung ist der Ausfall der dynamischen achslastabhängigen Bremskraftverteilung 470 jedoch zu verkraften. Für andere Fahrzeuge mit ungleichmäßiger Lastverteilung kann eine Achsmodulatorsignalleitung 115 notwendig sein, über die die Achsmodulatoren eine Bremskraftverteilung gewährleisten zu können.

Das Bremssystem 100 weist eine (einzige) zentrale Steuereinheit 110 auf. Die zentrale Steuereinheit 110 entspricht z. B. einem Zentralmodul in einem elektronischen Bremssystem EBS. Das Bremssystem 100 weist einen ersten und zweiten Achsmodulator 120, 130 auf. Vorzugsweise wird für jede Achse 220, 230, 240 des Fahrzeugs 200 ein Achsmodulator 120, 130, 140 vorgesehen. Die zentrale Steuereinheit 110 erhält ein Bremssignal 211 von dem Bremswertgeber 210 des Fahrzeugs 200. Optional wird das Bremssignal 211 ebenfalls direkt dem mindestens einen ersten und zweiten Achsmodulator 120, 130 zugeführt. In einer bevorzugten Ausführungsform wird das Bremssignal vom Bremswertgeber über mehrere Signalleitungen zur Verfügung gestellt, wobei jede Signalleitung mit jeweils einem Achsmodulator verbunden ist. Alle Signalleitungen zusammen sind zudem ebenfalls mit dem zentralen Steuergerät verbunden.

Die Achsmodulatoren 120, 130 weisen jeweils eine Achssteuereinheit 121, 131 sowie Bremsmodulatoren 122, 132 für jedes Rad auf, welches an der Achse angeordnet ist.

Der erste Achsmodulator 120 empfängt ein erstes Bremssignal 111 über die Leitung 110a und der zweite Achsmodulator 130 empfängt ein zweites Bremssignal 112 über die Leitung 110b von der zentralen Steuereinheit 110.

In oder an jedem Rad 221, 222, 231, 232 des Fahrzeugs ist ein Bremsaktuator 123a, 123b, 133a, 133b vorgesehen, der von den jeweiligen Bremsmodulatoren 122, 132 gesteuert wird.

Für das elektronisch geregelte Bremssystem EBS wird eine Verzögerung von der zentralen Steuereinheit 110 in Abhängigkeit von dem Bremssignal 211 von dem Bremswertgeber 210 sowie in Abhängigkeit von Fahrzeugstabilitätsprogrammen und/oder Fahrerassistenzsystemen ermittelt. Die Fahrzeugstabilitätsprogramme und/oder Fahrerassistenzsysteme können in der zentralen Steuereinheit 110 realisiert werden oder mit der zentralen Steuereinheit 110 verbunden sein. Die zentrale Steuereinheit 110 erzeugt dann ein Bremssignal 111, 112 für jeden der Achsmodulatoren 120, 130. Die Achsmodulatoren 120, 130 wandeln diese Bremsinformationen mittels der Bremsmodulatoren 122, 132 in Signale für die jeweiligen Bremsaktuatoren 123a, 123b, 133a, 133b um.

Die Achsmodulatoren 120, 130 empfangen nicht nur das erste und zweite Bremssignal 111, 112 von der zentralen Steuereinheit 110, sondern auch direkt das Bremssignal 211 von dem Bremswertgeber 210. Dies erfolgt, um eine Sicherheitsredundanz vorzusehen, insbesondere für den Fall, dass die zentrale Steuereinheit oder die Signalleitungen 110a, 110b gestört sind. Falls dieser Fall eingetreten ist, dann können die Achsmodulatoren 120, 130 basierend auf dem direkt von dem Bremswertgeber 210 empfangenen Bremssignal 211 über die Bremsmodulatoren 122, 132 die jeweiligen Bremsaktuatoren 123a, 123b, 133a, 133b entsprechend ansteuern, um ein Abbremsen des Fahrzeugs zu ermöglichen.

Die Bremsaktuatoren können hydraulisch, pneumatisch oder elektrisch angetrieben bzw. betätigt werden.

Wenn in einem Fehlerfall die zentrale Steuereinheit 110 und/oder die Signalleitungen 110a, 110b fehlerhaft sind, dann können die Achsmodulatoren basierend auf dem Bremssignal 211 und optional unter Berücksichtigung von Bremskraftverteilungsparametern eine Verzögerung des Fahrzeugs initiieren.

Bei einem Fehlerfall (Defekt der zentralen Steuereinheit 110 oder der Signalleitung 11 0a, 110b) können die Achsmodulatoren eine Verzögerung des Fahrzeugs auch ohne die zentrale Steuereinheit 110 bewirken. Dies bedeutet dann aber auch, dass die von der zentralen Steuereinheit 110 realisierten bzw. mitberücksichtigten Fahrzeugstabilitätsprogramme 410 und/oder Fahrerassistenzsysteme 420 nicht mitberücksichtigt werden können.

Jeder Achsmodulator 120, 130 ist einer Achse 220, 230 des Fahrzeugs 200 zugeordnet. Vorzugsweise sind die Achsmodulatoren 120, 130 in, an oder in der Nähe der jeweiligen Achse 220, 230 vorgesehen. Jeder Achsmodulator 120, 130 weist eine Achssteuereinheit 121,131 zwei Bremsmodulatoren 122, 132 und elektromechanische Bremsaktuatoren 123a, 123b, 133a, 133b auf. Die Bremsmodulatoren weisen optional elektrische oder elektronische Schalteinheiten zur Ansteuerung und zur Leistungsübertragung an die elektromechanischen Bremsaktuatoren auf.

Gemäß einem Aspekt der vorliegenden Erfindung ist optional eine dritte Signalleitung 115 zwischen dem ersten und zweiten Achsmodulator 120, 130 vorgesehen. Bei einem Fehlerfall 430 (Ausfall der zentralen Steuereinheit 110) könnten damit die Achsmodulatoren 120, 130 miteinander kommunizieren, um eine gewünschte Verzögerung des Fahrzeugs realisieren zu können. Hierbei können nicht nur Bremskraftverteilungsparameter mitberücksichtigt werden, sondern es kann auch situationsabhängig eine Bremskraftverteilung 470 mit dem Ziel der bestmöglichen Fahrzeugverzögerung bei bestmöglicher Fahrstabilität stattfinden. Insbesondere bei Fahrzeugen mit einer ungleichmäßigen Gewichtsverteilung M1, M2 ist dies zuträglich. In einem derartigen Fehlerfall 430 können Fahrerassistenzsysteme 410 und Fahrzeugstabilitätssysteme 420 nicht mitberücksichtigt werden, da diese nur von der zentralen Steuereinheit 110 bearbeitet bzw. mitberücksichtigt werden.

Die Bremsmodulatoren 122, 132 geben ein Bremsmodulationssignal 122a, 132a an die Bremsaktuatoren 123a, 123b, 133a, 133b aus, welches die Bremsaktuatoren 123, 133 veranlasst, eine gewünschte Verzögerung oder ein gewünschtes Abbremsen durchzuführen.

Gemäß einem Aspekt der vorliegenden Erfindung können die Bremsaktuatoren 123a, 123b, 133a, 133b elektrisch angesteuert werden. Dies ist vorteilhaft, weil in den Bremsaktuatoren sowie in dem Bremsmodulator keine weitergehende bzw. zusätzliche Intelligenz vorhanden sein muss. Dies ist insbesondere vorteilhaft im Hinblick auf die Zuverlässigkeit der Bremsmodulatoren und der Bremsaktuatoren. Insbesondere weisen diese eine geringere Anfälligkeit gegen Erschütterungen sowie Witterungseinflüsse und Temperatureinflüsse auf.

Gemäß einem Aspekt der vorliegenden Erfindung weisen die jeweiligen Achsmodulatoren 120, 130 optional die gesamte Elektronik auf, welche für die Bestimmung der jeweiligen Bremssignale und die Ansteuerung der Bremsaktuatoren benötigt werden. Da die Achsmodulatoren 120, 130 in, an oder in der Nähe der Achse 220, 230 vorgesehen sind, sind diese den Witterungseinflüssen weniger ausgesetzt als Elektronik, welche in oder an dem Rad integriert ist.

Das Bremssystem 100 weist ferner eine Energieversorgungseinheit 150 auf. Diese Energieversorgung kann mit einer Energieversorgung des Fahrzeugs verbunden sein und weist eine vorab festgelegte Speichermöglichkeit auf, um das Bremssystem in einem Fehlerfall noch mit Energie versorgen zu können. Insbesondere kann die Energieversorgungseinheit 150 eine Mehrzahl von wiederaufladbaren Akkumulatoren 151 aufweisen.

Die Achsmodulatoren 120, 130 und insbesondere die Achssteuereinheit 121, 131 sind optional dazu geeignet, eine Antiblockiersystem ABS-Regelung unabhängig von der zentralen Steuereinheit 110 durchzuführen.

Optional kann das Bremssystem 100 eine redundante Bremseinheit 300 (z.B. ein pneumatischen Bremskreis) aufweisen, die unabhängig von der zentralen Steuereinheit 110 arbeitet und z.B. bei einem Fehler in oder an der zentralen Steuereinheit 110 zumindest eine Notbremsung ermöglicht. Dazu kann die Bremseinheit 300 über Leitungen 301, 302, 303 mit den Achsmodulatoren 120, 130, 140 gekoppelt sein. Die Achsmodulatoren können daher über einen zusätzlichen Anschluss für einen redundanten pneumatischen Bremskreis verfügen. Alternativ dazu kann die Bremseinheit 300 auch direkt mit den Bremsmodulatoren oder den Bremsaktuatoren gekoppelt sein.

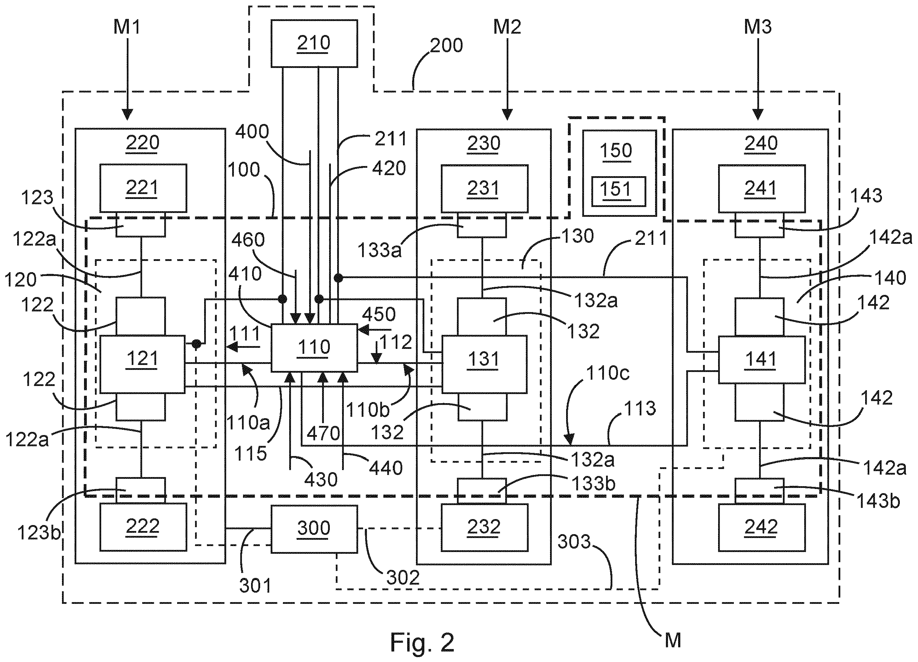

Figur 2 zeigt eine schematische Darstellung eines Bremssystems gemäß einem zweiten Ausführungsbeispiel. Das Bremssystem gemäß dem zweiten Ausführungsbeispiel entspricht im Wesentlichen dem Bremssystem gemäß dem ersten Ausführungsbeispiel, wobei das Fahrzeug drei Achsen 220, 230, 240 aufweist. Damit weist das Bremssystem gemäß dem zweiten Ausführungsbeispiel drei Achsmodulatoren 120, 130, 140 auf. Der Aufbau der jeweiligen Achsmodulatoren gemäß dem zweiten Ausführungsbeispiel entspricht dem Aufbau der Achsmodulatoren gemäß dem ersten Ausführungsbeispiel. Jeder Achsmodulator empfängt somit ein Bremssignal 111, 112, 113 von der zentralen Steuereinheit 110 sowie ein Bremssignal 211 von dem Bremswertgeber 210. Optional kann die Signalleitung 115 sich zwischen benachbarten Achsmodulatoren 120, 130, 140 erstrecken, so dass die Achsmodulatoren über die dritte Signalleitung 115 insbesondere in einem Fehlerfall miteinander kommunizieren können.

### Bezugszeichenliste als Bestandteil der Beschreibung

- 100: Bremssystem
- 110: zentrale Steuereinheit
- 111: erstes Bremssignal
- 112: zweites Bremssignal
- 110a: erste Signalleitung
- 110b: zweite Signalleitung
- 110c: dritte Signalleitung
- 115: Achsmodulatorsignalleitung
- 120: erster Achsmodulator
- 121: Achssteuereinheit
- 122: Bremsmodulator
- 122a: Bremsmodulatorsignal
- 123a: Bremsaktuator
- 123b: Bremsaktuator

- 130: zweiter Achsmodulator
- 131: Achssteuereinheit
- 132: Bremsmodulator
- 132a: Bremsmodulatorsignal
- 133a: Bremsaktuator
- 133b: Bremsaktuator
- 140: dritter Achsmodulator
- 141: Achssteuereinheit
- 142: Bremsmodulation
- 142a: Bremsmodulatorsignal
- 143a: Bremsaktuator
- 143b: Bremsaktuator
- 150: Energieversorgungseinheit
- 151: wiederaufladbarer Akkumulator
- 200: Fahrzeug
- 210: Bremswertgeber
- 211: Bremssignal
- 220: erste Achse
- 221: Rad
- 222: Rad
- 230: zweite Achse
- 231: Rad
- 232: Rad
- 240: dritte Achse
- 241: Rad
- 242: Rad
- 300: Bremseinheit
- 400: weitere Bremsanforderung
- 410: Fahrstabilitätsprogram
- 420: Fahrassistenzprogram
- 430: Fehler
- 440: Bremskraftverteilung
- 450: Notbremsanforderung
- 460: Bremskraftverteilungsparameter
- 470: Bremskraftverteilung
- M: Masse
- M1, M2: Masseverteilung
- ABS: Antiblockiersystem

## Patentansprüche

1. Elektrisches Bremssystem (100) für Fahrzeuge (200), das einen Bremswertgeber (210), mindestens eine erste Achse (220) mit mindestens zwei Rädern (221, 222) und eine zweite Achse (230) mit mindestens zwei Rädern (231, 232) aufweist, mit
einem ersten Achsmodulator (120), welcher der ersten Achse (220) zugeordnet ist und mindestens einem zweiten Achsmodulator (130), welcher der zweiten Achse (230) zugeordnet ist,
einer einzigen zentralen Steuereinheit (110), welche dazu ausgestaltet ist, in Abhängigkeit von einem Bremssignal (211) von dem Bremswertgeber (210) oder in Abhängigkeit von einer weiteren Bremsanforderung (400) ein erstes Bremssignal (111) für den ersten Achsmodulator (120) und ein zweites Bremssignal (112) für den zweiten Achsmodulator (130) zu erzeugen und auszugeben,
wobei der erste und zweite Achsmodulator (120, 130) jeweils dazu ausgestaltet sind, die Räder (221, 222; 231, 232) der ersten und zweiten Achse (220, 230) über Bremsmodulatorsignale (122a, 132a, 142a) in Abhängigkeit von dem ersten und zweiten Bremssignal (111, 112) von der zentralen Steuereinheit (110) zu verzögern,
**dadurch gekennzeichnet, dass**
die Achsmodulatoren (120, 130, 140) das Bremssignal (211) von dem Bremswertgeber (210) als Eingangssignal zusätzlich zu dem ersten oder zweiten Bremssignal (111, 112, 113) von der zentralen Steuereinheit (110) empfangen und jeweils dazu ausgestaltet sind, bei einem Fehler (430) in oder an der zentralen Steuereinheit (110) das Bremssignal (211) von dem Bremswertgeber (210) als Eingangssignal zur Erzeugung der Bremsmodulatorsignale (122a, 132a, 142a) zu verwenden.

2. Elektrisches Bremssystem (100) für Fahrzeuge (200) nach Anspruch 1, wobei
jeder Achsmodulator (120, 130, 140) eine Achssteuereinheit (121, 131, 141), und mindestens zwei Bremsmodulatoren (122, 132, 142) aufweist,
wobei die Bremsmodulatoren (122, 132, 142) jeweils Bremsmodulatorsignale (122a, 132a, 142a) zur Steuerung von Bremsaktuatoren (123, 133, 143) erzeugen und an die Bremsaktuatoren (123, 133, 143) ausgeben.

3. Elektrisches Bremssystem (100) für Fahrzeuge (200) nach Anspruch 1 oder 2, ferner mit
mindestens einer Achsmodulatorsignalleitung (115) zwischen mindestens zwei Achsmodulatoren (120, 130, 140),
wobei die mindestens eine Achsmodulatorsignalleitung (115) einer Kommunikation zwischen den Achsmodulatoren (120, 130, 140) insbesondere bei einem Fehler (430) in oder an der zentralen Steuereinheit (110) dient.

4. Elektrisches Bremssystem (100) für Fahrzeuge (200) nach einem der Ansprüche 1 bis 3, wobei
die zentrale Steuereinheit (110) dazu ausgestaltet ist, die weitere Bremsanforderungen in Form von Fahrzeugstabilitätsprogramme (410) und/oder Fahrassistenzprogramme (420) bei der Erzeugung des ersten und zweiten Bremssignal (111, 112) mit zu berücksichtigen.

5. Elektrisches Bremssystem (100) für Fahrzeuge (200) nach einem der Ansprüche 1 bis 4, wobei
die Achsmodulatoren (120, 130, 140) jeweils dazu ausgestaltet sind, eine Antiblockier-Steuerung (ABS) durchzuführen.

6. Elektrisches Bremssystem (100) für Fahrzeuge (200) nach einem der Ansprüche 1 bis 4, wobei
die weitere Bremsanforderung (400) eine Notbremsanforderung (450) darstellt.

7. Elektrisches Bremssystem (100) für Fahrzeuge (200) nach einem der Ansprüche 1 bis 6, wobei
die zentrale Steuereinheit (110) in einem der Achsmodulatoren (120, 130, 140) integriert ist.

8. Fahrzeug (200), insbesondere Nutzfahrzeug (200), mit
einem Bremswertgeber (210),
mindestens einer ersten Achse (220) mit mindestens zwei Rädern (221, 222),
einer zweiten Achse (230) mit mindestens zwei Rädern (231, 232), und
mindestens einem elektrischen Bremssystem (100) nach einem der Ansprüche 1 bis 7.

9. Fahrzeug (200) nach Anspruch 8, wobei
eine Massenverteilung (M1, M2) einer Masse (M) des Fahrzeugs (200) auf die erste und zweite Achse (120, 130) im Wesentlichen gleichmäßig ist oder über Bremskraftverteilungsparameter (460) eine Bremskraftverteilung (470) entsprechend einer ungleichmäßigen Gewichtsverteilung (M1, M2) eingestellt werden kann oder über eine Achsmodulsignalleitung (115) eine Bremskraftverteilung (470) situationsabhängig zwischen dem mindestens ersten und zweiten Achsmodulatoren (120, 130, 140) vorgesehen werden kann.

10. Verfahren zum Steuern eines elektrischen Bremssystems (100) nach einem der Ansprüch 1 bis 7 für Fahrzeuge (200), mit den Schritten:
Erzeugen eines ersten Bremssignals (111) für den ersten Achsmodulator (120) und eines zweiten Bremssignal (112) für den zweiten Achsmodulator (130) in Abhängigkeit von einem Bremssignal (211) von dem Bremswertgeber (210) durch eine einzige zentrale Steuereinheit (110), wobei bei einem Fehler (430) in oder an der zentralen Steuereinheit (110) das Bremssignal (211) von dem Bremswertgeber (210) als Eingangssignal für die Achsmodulatoren (120, 130) verwendet wird, und
Verzögern der Räder (221, 222; 231, 232) der ersten und zweiten Achse (220, 230) in Abhängigkeit vom dem ersten und zweiten Bremssignal (111, 112) von der zentralen Steuereinheit (110) oder in Abhängigkeit vom Bremssignal (211) des Bremswertgebers (210).

## Claims

1. Electrical brake system (100) for vehicles (200), comprising a brake value transmitter (210), at least one first axle (220) having at least two wheels (221, 222), and a second axle (230) having at least two wheels (231, 232), comprising
a first axle modulator (120) which is associated with the first axle (220) and at least one second axle modulator (130) which is associated with the second axle (230),
a single central control unit (110), which is designed to generate and output a first braking signal (111) for the first axle modulator (120) and a second braking signal (112) for the second axle modulator (130) depending on a braking signal (211) from the brake value transmitter (210) or depending on a further braking request (400),
the first and the second axle modulator (120, 130) each being designed to decelerate the wheels (221, 222; 231, 232) of the first and the second axle (220, 230) via brake modulator signals (122a, 132a, 142a) depending on the first and the second braking signal (111, 112) from the central control unit (110),
**characterized in that**
the axle modulators (120, 130, 140) receive the braking signal (211) from the brake value generator (210) as an input signal in addition to the first or the second braking signal (111, 112, 113) from the central control unit (110) and are each designed, in the event of a fault (430) in or at the central control unit (110), to use the braking signal (211) from the brake value generator (210) as an input signal for generating the brake modulator signals (122a, 132a, 142a).

2. Electrical brake system (100) for vehicles (200) according to claim 1, wherein
each axle modulator (120, 130, 140) has an axle control unit (121, 131, 141) and at least two brake modulators (122, 132, 142),
wherein the brake modulators (122, 132, 142) each generate brake modulator signals (122a, 132a, 142a) for controlling brake actuators (123, 133, 143) and output them to the brake actuators (123, 133, 143).

3. Electrical brake system (100) for vehicles (200) according to either claim 1 or claim 2, further comprising
at least one axle modulator signal line (115) between at least two axle modulators (120, 130, 140),
wherein the at least one axle modulator signal line (115) is used for communication between the axle modulators (120, 130, 140) in particular in the event of a fault (430) in or at the central control unit (110).

4. Electrical brake system (100) for vehicles (200) according to any of claims 1 to 3, wherein
the central control unit (110) is designed to take into account the further braking requests in the form of vehicle stability programs (410) and/or driver assistance programs (420) when generating the first and the second braking signal (111, 112).

5. Electrical brake system (100) for vehicles (200) according to any of claims 1 to 4, wherein
the axle modulators (120, 130, 140) are each designed to perform antilock control (ABS).

6. Electrical brake system (100) for vehicles (200) according to any of claims 1 to 4, wherein
the further braking request (400) is an emergency braking request (450).

7. Electrical brake system (100) for vehicles (200) according to any of claims 1 to 6, wherein
the central control unit (110) is integrated in one of the axle modulators (120, 130, 140).

8. Vehicle (200), in particular commercial vehicle (200), comprising
a brake value transmitter (210),
at least one first axle (220) having at least two wheels (221, 222),
a second axle (230) having at least two wheels (231, 232), and
at least one electrical brake system (100) according to any of claims 1 to 7.

9. Vehicle (200) according to claim 8, wherein
a mass distribution (M1, M2) of a mass (M) of the vehicle (200) is substantially uniform on the first and the second axle (120, 130), or a braking force distribution (470) corresponding to an uneven weight distribution (M1, M2) can be set via braking force distribution parameters (460), or a braking force distribution (470) can be provided between the at least first and the second axle modulators (120, 130, 140) via an axle module signal line (115) depending on the situation.

10. Method for controlling an electrical brake system (1) according to any of claims 1 to 7 for vehicles (200), comprising the following steps:
generating, by means of a single central control unit (110), a first braking signal (111) for the first axle modulator (120) and a second braking signal (112) for the second axle modulator (130) depending on a braking signal (211) from the brake value transmitter (210), wherein, in the event of a fault (430) in or at the central control unit (110), the braking signal (211) is used by the brake value generator (210) as an input signal for the axle modulators (120, 130), and
decelerating the wheels (221,222; 231,232) of the first and the second axle (220, 230) depending on the first and the second braking signal (111, 112) from the central control unit (110) or depending on the braking signal (211) of the brake value transmitter (210).

## Revendications

1. Système de freinage (100) électrique pour des véhicules (200), lequel présente un générateur de valeur de freinage (210), au moins un premier essieu (220) comportant au moins deux roues (221, 222) et un second essieu (230) comportant au moins deux roues (231, 232), comportant
un premier modulateur d'essieu (120) qui est associé au premier essieu (220) et au moins un second modulateur d'essieu (130) qui est associé au second essieu (230),
une unité de commande (110) centrale unique qui est configurée pour générer et délivrer en sortie, en fonction d'un signal de freinage (211) provenant du générateur de valeur de freinage (210) ou en fonction d'une autre demande de freinage (400), un premier signal de freinage (111) pour le premier modulateur d'essieu (120) et un second signal de freinage (112) pour le second modulateur d'essieu (130),
dans lequel les premier et second modulateurs d'essieu (120, 130) sont respectivement configurés pour ralentir les roues (221, 222 ; 231, 232) des premier et second essieux (220, 230) par l'intermédiaire de signaux de modulateur de freinage (122a, 132a, 142a) en fonction des premier et second signaux de freinage (111, 112) provenant de l'unité de commande (110) centrale,
**caractérisé en ce que**
les modulateurs d'essieu (120, 130, 140) reçoivent le signal de freinage (211) provenant du générateur de valeur de freinage (210) comme signal d'entrée en plus du premier ou du second signal de freinage (111, 112, 113) provenant de l'unité de commande (110) centrale, et sont respectivement configurés pour utiliser, en cas d'erreur (430) dans ou au niveau de l'unité de commande (110) centrale, le signal de freinage (211) provenant du générateur de valeur de freinage (210) comme signal d'entrée pour la génération des signaux de modulateur de freinage (122a, 132a, 142a).

2. Système de freinage (100) électrique pour des véhicules (200) selon la revendication 1, dans lequel
chaque modulateur d'essieu (120, 130, 140) présente une unité de commande d'essieu (121, 131, 141), et au moins deux modulateurs de freinage (122, 132, 142),
dans lequel les modulateurs de freinage (122, 132, 142) génèrent respectivement des signaux de modulateur de freinage (122a, 132a, 142a) pour la commande d'actionneurs de frein (123, 133, 143) et les délivrent en sortie aux actionneurs de frein (123, 133, 143).

3. Système de freinage (100) électrique pour des véhicules (200) selon la revendication 1 ou 2, comportant en outre
au moins une ligne de signaux de modulateur d'essieu (115) entre au moins deux modulateurs d'essieu (120, 130, 140),
dans lequel l'au moins une ligne de signaux de modulateur d'essieu (115) permet une communication entre les modulateurs d'essieu (120, 130, 140), en particulier en cas d'erreur (430) dans ou au niveau de l'unité de commande (110) centrale.

4. Système de freinage (100) électrique pour des véhicules (200) selon l'une des revendications 1 à 3, dans lequel
l'unité de commande (110) centrale est configurée pour prendre en compte les autres demandes de freinage sous forme de programmes de stabilité de véhicule (410) et/ou de programmes d'aide à la conduite (420) lors de la génération des premier et second signaux de freinage (111, 112).

5. Système de freinage (100) électrique pour des véhicules (200) selon l'une des revendications 1 à 4, dans lequel
les modulateurs d'essieu (120, 130, 140) sont respectivement configurés pour exécuter une commande antiblocage (ABS).

6. Système de freinage (100) électrique pour des véhicules (200) selon l'une des revendications 1 à 4, dans lequel
l'autre demande de freinage (400) représente une demande de freinage d'urgence (450).

7. Système de freinage (100) électrique pour des véhicules (200) selon l'une des revendications 1 à 6, dans lequel
l'unité de commande (110) centrale est intégrée dans l'un des modulateurs d'essieu (120, 130, 140).

8. Véhicule (200), en particulier véhicule utilitaire (200), comportant
un générateur de valeur de freinage (210),
au moins un premier essieu (220) comportant au moins deux roues (221, 222),
un second essieu (230) comportant au moins deux roues (231, 232), et
au moins un système de freinage (100) électrique selon l'une des revendications 1 à 7.

9. Véhicule (200) selon la revendication 8, dans lequel
une répartition de masse (M1, M2) d'une masse (M) du véhicule (200) sur les premier et second essieux (120, 130) est sensiblement uniforme ou une répartition de force de freinage (470) peut être réglée par l'intermédiaire de paramètres de répartition de force de freinage (460) en fonction d'une répartition de poids (M1, M2) non uniforme ou une répartition de force de freinage (470) peut être prévue, en fonction de la situation, entre les au moins premier et second modulateurs d'essieu (120, 130, 140) par l'intermédiaire d'une ligne de signaux de module d'essieu (115).

10. Procédé permettant de commander un système de freinage (100) électrique selon l'une des revendications 1 à 7 pour des véhicules (200), comportant les étapes suivantes :
génération, par une unité de commande (110) centrale unique, d'un premier signal de freinage (111) pour le premier modulateur d'essieu (120) et d'un second signal de freinage (112) pour le second modulateur d'essieu (130) en fonction d'un signal de freinage (211) provenant du générateur de valeur de freinage (210), dans lequel, en cas d'erreur (430) dans ou au niveau de l'unité de commande (110) centrale, le signal de freinage (211) provenant du générateur de valeur de freinage (210) est utilisé comme signal d'entrée pour les modulateurs d'essieu (120, 130), et
ralentissement des roues (221, 222 ; 231, 232) des premier et second essieux (220, 230) en fonction des premier et second signaux de freinage (111, 112) provenant de l'unité de commande (110) centrale ou en fonction du signal de freinage (211) du générateur de valeur de freinage (210).
